# EUROPÄISCHE PATENTSCHRIFT

(11) **EP 1 086 000 B1**
(45) Veröffentlichungstag und Bekanntmachung des Hinweises auf die Patenterteilung: **27.11.2002**
(21) Anmeldenummer: 99927826.0
(22) Anmeldetag: 01.06.1999
(51) Int. Cl.: B60R 5/04

(54) **EINRICHTUNG ZUM TRANSPORT VON GEGENSTÄNDEN IN EINEM KFZ**
DEVICE FOR TRANSPORTING OBJECTS IN A MOTOR VEHICLE
DISPOSITIF POUR TRANSPORTER DES OBJETS DANS UNE AUTOMOBILE

(30) Priorität: 09.06.1998 DE 29810334 U
(43) Veröffentlichungstag der Anmeldung: 28.03.2001
(73) Patentinhaber: Johnson Controls GmbH, 51399 Burscheid (DE)
(72) Erfinder: BLEAU, John, Holland, MI 49424 (US); KARACSONYI, Tamas, D-42389 Wuppertal (DE); DEARMAN, Mike, D-50931 Köln (DE)
(74) Vertreter: Zapf, Christoph, Dipl.-Ing.
(86) Internationale Anmeldenummer: EP9903791
(87) Internationale Veröffentlichungsnummer: WO99064271

(56) Entgegenhaltungen:
- DE-A- 3 332 695
- DE-A- 19 616 963
- DE-A- 19 641 386
- DE-U- 8 623 620
- PATENT ABSTRACTS OF JAPAN vol. 098, no. 005, 30. April 1998 (1998-04-30) -& JP 10 007030 A (NISSAN MOTOR CO LTD), 13. Januar 1998 (1998-01-13)
- PATENT ABSTRACTS OF JAPAN vol. 098, no. 003, 27. Februar 1998 (1998-02-27) & JP 09 301078 A (CENTRAL MOTOR CO LTD), 25. November 1997 (1997-11-25)
- PATENT ABSTRACTS OF JAPAN vol. 018, no. 637 (M-1716), 5. Dezember 1994 (1994-12-05) & JP 06 247211 A (MAZDA MOTOR CORP), 6. September 1994 (1994-09-06)

## Beschreibung

Die vorliegende Erfindung betrifft eine Einrichtung zum Transport von Gegenständen in einem Fahrzeug, bestehend aus einem im wesentlichen wannenförmigen Aufnahmebehälter, wobei der Aufnahmebehälter aus einem rahmenartigen, in dem Fahrzeug befestigbaren Halteteil und mindestens einem von dem Halteteil zur Bildung einer Zugriffsöffnung im Bereich einer fahrzeugseitigen Reserverad-Aufnahme entfernbaren Teilbehälter besteht.

Es sind solche Transportwannen bekannt, die in der Regel lose in Gepäckräume von Kraftfahrzeugen, z.B. Kombiwagen, einzusetzen sind. Nachteilig dabei ist, daß Gepäckstücke oder sonstige zu transportierende Gegenstände in der Transportwanne im wesentlichen unfixiert sind und deshalb während der Fahrt unkontrolliert verrutschen können. Dies könnte wegen der ebenfalls grundsätzlich nicht fixierten Anordnung der Transportwanne selbst sogar zu einer Gefährdung der im Fahrzeug befindlichen Personen führen. Zudem ist bei den meisten Fahrzeugen im Bereich des Gepäckraums ein Reserverad in einer muldenförmigen Aufnahme untergebracht, so daß für eine Entnahme zunächst die gesamte Transportwanne einschließlich aller darin befindlichen Gegenstände herausgenommen werden müßte.

Der vorliegenden Erfindung liegt deshalb die Aufgabe zugrunde, eine Transporteinrichtung der gattungsgemäßen Art zu schaffen, die eine erhöhte Sicherheit für die Fahrzeuginsassen sowie einen erhöhten Benutzungskomfort gewährleistet.

Erfindungsgemäß wird dies dadurch erreicht, daß die Zugriffsöffnung derart bemessen, sowie im eingebauten Zustand relativ zur fahrzeugseitigen Reserverad-Aufnahme derart angeordnet ist, daß ein Reserverad durch die Zugriffsöffnung führbar ist.

Durch das erfindungsgemäß in dem Fahrzeug befestigbare Halteteil wird zunächst eine hohe Sicherheit gegen Verrutschen des Aufnahmebehälters selbst erreicht. Dennoch bleibt vorteilhafterweise die fahrzeugseitige Reserverad-Aufnahme zur Entnahme bzw. zum Einlegen eines Reserverades zugänglich, indem lediglich der lösbar in das Halteteil eingesetzte Teilbehälter entfernt zu werden braucht. Dies bedeutet entweder, daß der Teilbehälter ganz herausnehmbar oder aber wenigstens klappdeckelartig nach oben schwenkbar ist.

Der erfindungsgemäße Aufnahmebehälter wird bezüglich seiner äußeren Raumform an die räumlichen Gegebenheiten des jeweiligen Fahrzeugs angepaßt. Hierbei ist es besonders vorteilhaft, wenn das Halteteil an fahrzeugseitigen Halterungen befestigbar ist, wobei diese Halterungen vorzugsweise auch zum Befestigen einer Sitzkonstruktion geeignet sind. Umgekehrt ausgedrückt bedeutet dies, daß nach Demontage und Entnahme der Sitzkonstruktion an denselben fahrzeugseitigen Halterungen der erfindungsgemäße Aufnahmebehälter bzw. dessen Halteteil befestigt werden kann. Hierzu sind die Halterungen beispielsweise von Schraubpunkten (Gewindelöchern) gebildet, an denen das Halteteil durch Verschrauben befestigbar ist.

Der erfindungsgemäße Aufnahmebehälter kann noch weitere vorteilhafte Ausgestaltungsmerkmale aufweisen, die vor allem der Sicherheit gegen Verrutschen oder sonstige unkontrollierte Bewegungen von Transportgegenständen dienen. So ist es vorteilhaft, wenn der Teilbehälter sowie bevorzugt vorgesehene weitere Aufnahmefächer mit jeweils mindestens einem Deckelelement verschließbar sind. Zudem können Trennwandelemente vorgesehen sein, die insbesondere lösbar und wahlweise an verschiedenen Stellen einsetzbar sind. Ferner kann mit Vorteil vorgesehen sein, daß mindestens eines der Deckelelemente aus seiner normalen Deckelposition in einer zur Behälterebene im wesentlichen senkrechten Anordnung fixierbar ist, um hierdurch eine Trenn- bzw. Ladungsrückhaltewand zu bilden.

Weitere vorteilhafte Ausgestaltungsmerkmale der Erfindung sind in den Unteransprüchen sowie der folgenden Beschreibung enthalten.

Anhand eines bevorzugten Ausführungsbeispiels soll die Erfindung nun näher erläutert werden. Dabei zeigen:
- Fig. 1: eine Perspektivansicht eines erfindungsgemäßen Aufnahmebehälters während des Einsetzens relativ zu einem nur teilweise angedeuteten Bodenbereich eines fahrzeugseitigen Gepäckraums,
- Fig. 2: den Aufnahmebehälter nach Fig. 1 zur Erläuterung der Entnehmbarkeit bzw. Einsetzbarkeit des Teilbehälters relativ zu dem im Fahrzeug befestigbaren Halteteil,
- Fig. 3 und 4: weitere Perspektivdarstellungen des Aufnahmebehälters zur Erläuterung weiterer Funktionen,
- Fig. 5: eine vergrößerte Draufsicht in Pfeilrichtung V gemäß Fig. 3 und
- Fig. 6: einen vergrößerten Vertikalschnitt in der Ebene VI-VI gemäß Fig. 5.

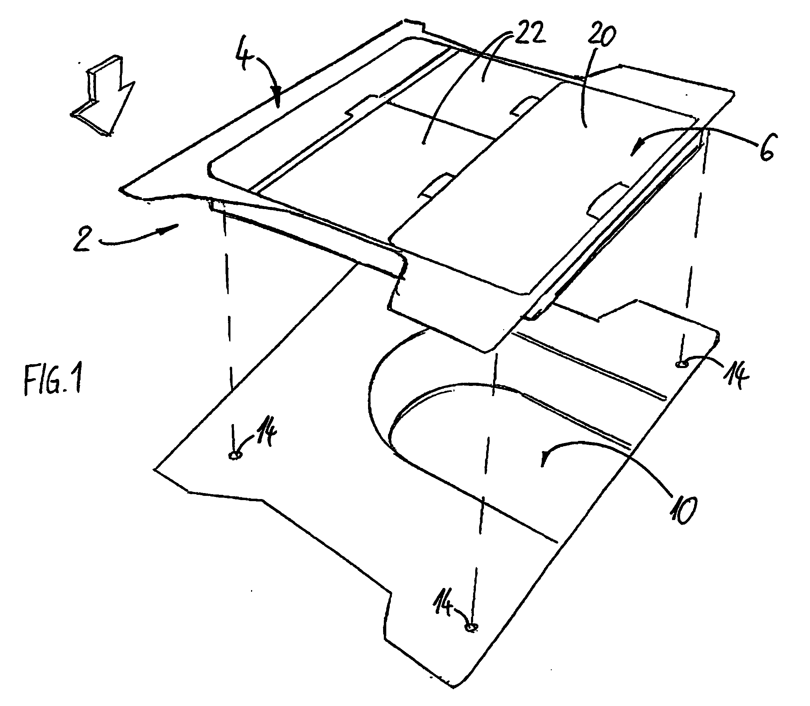

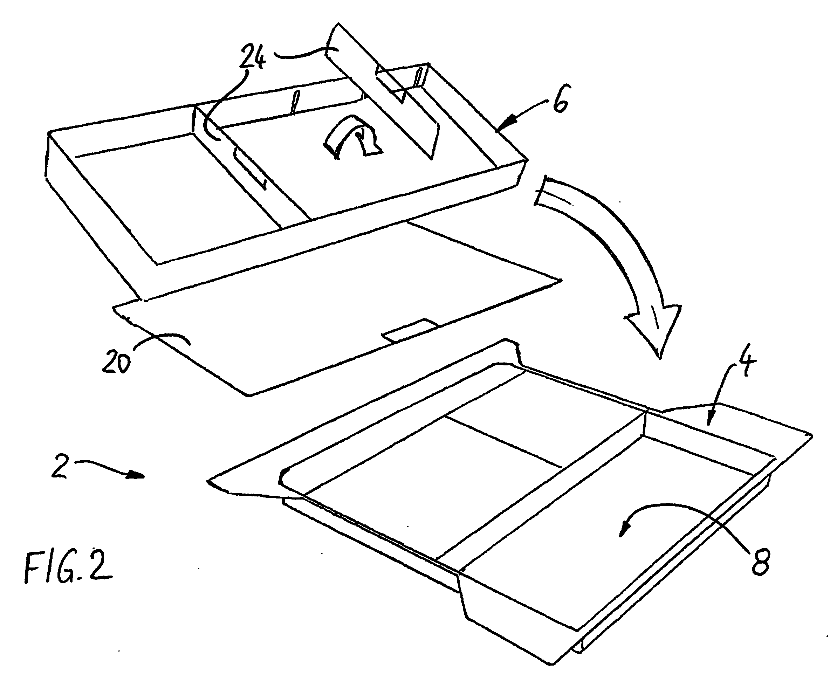

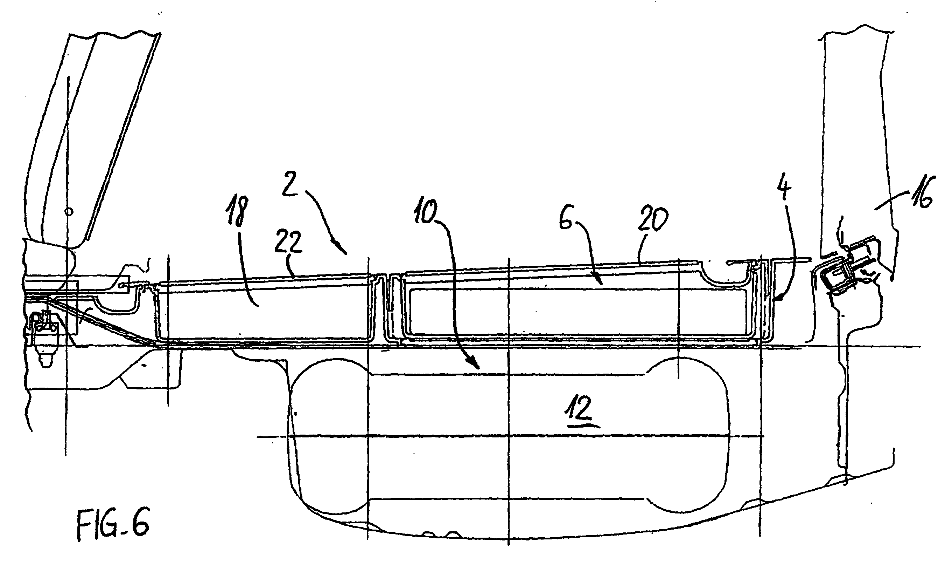

Als Einrichtung zum Transport von Gegenständen in einem Kraftfahrzeug ist ein im wesentlichen wannenförmiger Aufnahmebehälter 2 vorgesehen, der erfindungsgemäß aus einem rahmenartigen, in einem Fahrzeug lösbar befestigbaren Halteteil 4 und mindestens einem damit lösbar verbundenen Teilbehälter 6 besteht. Erfindungsgemäß ist dieser Teilbehälter 6 zur Bildung einer Zugriffsöffnung 8 - siehe Fig. 2 - aus dem Halteteil 4 herausnehmbar. Dabei ist die Zugriffsöffnung 8 in Anpassung an das jeweilige Fahrzeug derart angeordnet, daß sie eine fahrzeugseitige Reserverad-Aufnahme 10 (s. Fig. 1 und 6) mit einer bestimmten Öffnungsweite derart überdeckt, daß ein Reserverad 12 (nur in Fig. 6 erkennbar) durch die Zugriffsöffnung 8 hindurch entnommen oder eingelegt werden kann.

Wie in Fig. 1 schematisch angedeutet ist, ist das Halteteil 4 an fahrzeugseitigen Halterungen 14 befestigbar, wobei diese Halterungen 14 vorzugsweise auch zum Befestigen einer nicht dargestellten Sitzkonstruktion geeignet sind. Insofern entspricht die Anordnung der Halterungen 14 den Erfordernissen für die jeweilige Sitzkonstruktion, und der Aufnahmebehälter 2 ist erfindungsgemäß daran speziell angepaßt. Zweckmäßigerweise sind die Halterungen 14 von Schraubpunkten bzw. Gewindelöchern gebildet, wobei das Halteteil 4 durch nicht dargestellte Schrauben befestigbar ist.

Wie sich aus Fig. 6 ergibt, ist üblicherweise das Reserverad 12 in der Aufnahme 10 im hinteren, einer Hecktür 16 zugekehrten Bereich des Fahrzeugs angeordnet. Deshalb ist auch der Teilbehälter 6 in dem ins Fahrzeug eingesetzten Zustand des Aufnahmebehälters 2 im in Fahrtrichtung gesehen hinteren Bereich des Fahrzeugs angeordnet. Vorzugsweise weist hierbei der Aufnahmebehälter 2 in seinem in Fahrtrichtung gesehen vorderen Bereich mindestens ein weiteres Aufnahmefach 18 auf, welches bevorzugt durch einstückige, wannenartige Formgebung des Halteteils 4 gebildet ist.

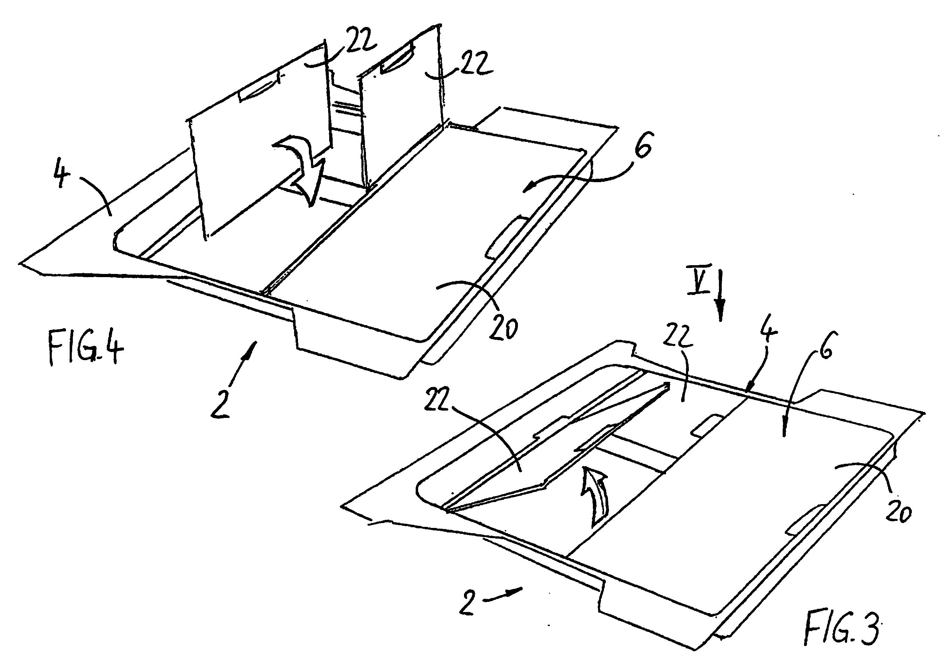

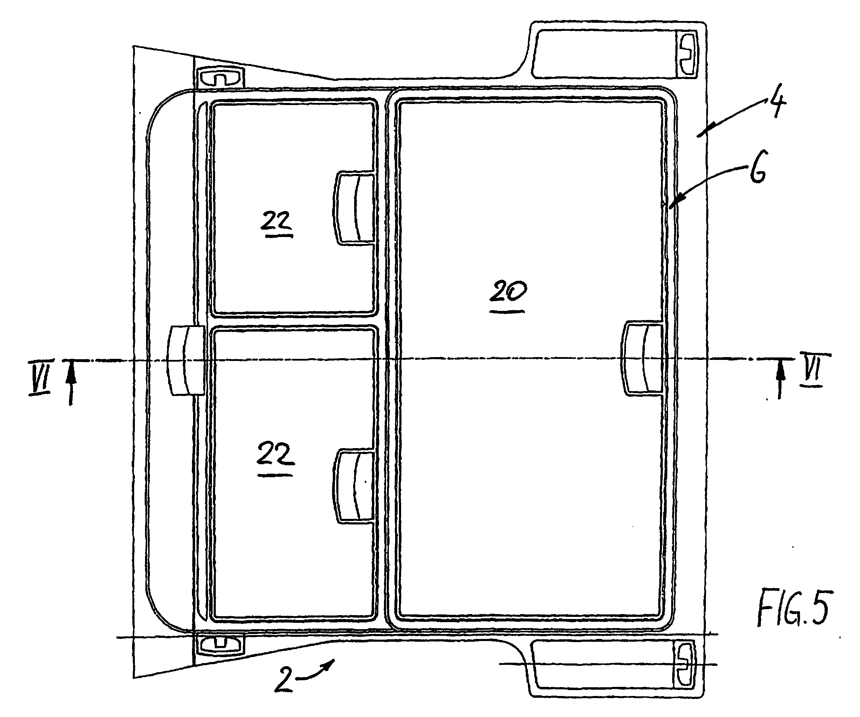

Zum Verschließen des Teilbehälters 6 und/oder des bzw. jedes weiteren Aufnahmefachs 18 ist mindestens ein Deckelelement 20, 22 vorgesehen. Der Teilbehälter 6 besitzt ein eigenes, größenmäßig entsprechendes Deckelelement 20, welches gemäß Fig. 2 zusammen mit dem Teilbehälter 6 entnehmbar ist. Im Bereich des Aufnahmefachs 18 können - wie dargestellt - zwei separate Deckelelemente 22 vorgesehen sein, die gemäß Fig. 5 auch unterschiedlich groß ausgebildet sein können. Gemäß Fig. 4 ist hierbei bevorzugt vorgesehen, daß mindestens eines dieser Deckelelemente 22 aus seiner normalen Deckelposition (Fig. 1, 2 und 3) in einer zur Behälterebene im wesentlichen senkrechten Anordnung fixierbar ist (s. Fig. 4), um so eine Trennwand bzw. Ladungsrückhaltewand zu bilden. Hierzu ist das Deckelelement 22 vorzugsweise von dem Aufnahmebehälter 2 bzw. von dem Halteteil 4 lösbar und dann in der senkrechten Anordnung mit seinen Seitenrändern in seitliche Führungen im Bereich des Aufnahmefachs 18 einschiebbar. Dies wird durch einen in Fig. 4 eingezeichneten Pfeil veranschaulicht.

Zur weiteren Sicherung von Transportgut gegen Verrutschen ist bevorzugt mindestens ein Trennwandelement 24 vorgesehen, welches gemäß Fig. 2 bevorzugt lösbar und wahlweise an verschiedenen Stellen in den Teilbehälter 6 und/oder in das Aufnahmefach einsetzbar ist.

In weiterer vorteilhafter Ausgestaltung kann der Aufnahmebehälter 2 nicht dargestellte Haltemittel für eine beispielsweise netzartige Gepäckraum-Abtrennung aufweisen. Ferner können mit Vorteil auch spezielle Haltemittel für bestimmte Gegenstände vorgesehen sein, beispielsweise für ein Fahrrad oder dergleichen.

Ein weiterer Sicherheitsaspekt besteht darin, daß der Aufnahmebehälter 2 bezüglich der Form und Größe des Innenraums des Teilbehälters 6 bzw. des Aufnahmefachs 18 derart ausgelegt ist, daß eine vorbestimmte Anzahl von gleichartigen Einsätzen im wesentlichen seitenspielfrei und hierdurch gegen Verrutschen fixiert unterbringbar ist. Derartige Einsätze können beispielsweise von Getränkekästen, Stapelboxen oder dergleichen gebildet sein. Dies bedeutet, daß die Grundfläche des Teilbehälters 6 bzw. des Aufnahmefachs 18 im wesentlichen einer Fläche entspricht, die sich durch die Grundflächen einer bestimmten Anzahl von unmittelbar nebenund/oder hintereinanderstehenden Einsätzen ergibt.

Abschließend sei erwähnt, daß der erfindungsgemäße Aufnahmebehälter 2 mit seinen Einzelteilen vorzugsweise aus einem Kunststoffmaterial besteht (Kunststoff-Formteile). Auf den Oberseiten kann mit Vorteil eine Beschichtung insbesondere aus einem Teppichbodenmaterial aufgebracht sein.

Der Teilbehälter 6 kann in seinem in das Halteteil 4 eingesetzten Zustand beispielsweise über Rastmittel fixiert sein. In ähnlicher Weise können auch die Deckelelemente 20, 22 in ihrer Verschlußstellung verrastet werden.

## Patentansprüche

1. Einrichtung zum Transport von Gegenständen in einem Fahrzeug, bestehend aus einem im wesentlichen wannenförmigen Aufnahmebehälter (2), wobei der Aufnahmebehälter (2) aus einem rahmenartigen, in dem Fahrzeug befestigbaren Halteteil (4) und mindestens einem von dem Halteteil (4) zur Bildung einer Zugriffsöffnung (8) im Bereich einer fahrzeugseitigen Reserverad-Aufnahme (10) entfernbaren Teilbehälter (6) besteht, **dadurch gekennzeichnet, daß** die Zugriffsöffnung (8) derart bemessen, sowie im eingebauten Zustand relativ zur fahrzeugseitigen Reserverad-Aufnahme (10) derart angeordnet ist, daß ein Reserverad (12) durch die Zugriffsöffnung (8) führbar ist.

2. Einrichtung nach Anspruch 1,
**dadurch gekennzeichnet, daß** das Halteteil (4) an fahrzeugseitigen Halterungen (14) befestigbar ist, wobei diese Halterungen (14) vorzugsweise auch zum Befestigen einer Sitzkonstruktion geeignet sind.

3. Einrichtung nach Anspruch 2,
**dadurch gekennzeichnet, daß** die Halterungen (14) von Schraubpunkten gebildet sind, an denen das Halteteil (4) durch Verschrauben befestigbar ist.

4. Einrichtung nach einem der Ansprüche 1 bis 3,
**dadurch gekennzeichnet, daß** der Teilbehälter (6) in einem in Fahrtrichtung gesehen hinteren, einer Hecktür (16) zugekehrten Bereich des Fahrzeugs anzuordnen ist.

5. Einrichtung nach einem der Ansprüche 1 bis 4,
**dadurch gekennzeichnet, daß** der Aufnahmebehälter (2) in einem in Fahrtrichtung gesehen vorderen Bereich mindestens ein weiteres Aufnahmefach (18) aufweist.

6. Einrichtung nach einem der Ansprüche 1 bis 5,
**dadurch gekennzeichnet, daß** der Teilbehälter (6) und/oder das bzw. jedes weitere Aufnahmefach (18) mit jeweils mindestens einem Deckelelement (20,22) verschließbar sind/ist.

7. Einrichtung nach einem der Ansprüche 1 bis 6,
**dadurch gekennzeichnet, daß** der Teilbehälter (6) und/oder das bzw. jedes weitere Aufnahmefach (18) mindestens ein - insbesondere lösbar und wahlweise an verschiedenen Stellen einsetzbares - Trennwandelement (24) aufweist.

8. Einrichtung nach Anspruch 6 oder 7,
**dadurch gekennzeichnet, daß** mindestens eines der Deckelelemente (22) aus seiner Deckelposition in einer zur Behälterebene im wesentlichen senkrechten Anordnung fixierbar ist.

9. Einrichtung nach Anspruch 8,
**dadurch gekennzeichnet, daß** das Deckelelement (22) von dem Aufnahmebehälter (2) lösbar und in der senkrechten Anordnung mit seinen Seitenrändem in seitliche Führungen insbesondere des zusätzlichen Aufnahmefaches (18) einschiebbar ist.

10. Einrichtung nach einem der Ansprüche 1 bis 9,
**dadurch gekennzeichnet, daß** der Aufnahmebehälter (2) Haltemittel für eine beispielsweise netzartige Gepäckraum-Abtrennung aufweist.

11. Einrichtung nach einem der Ansprüche 1 bis 10,
**dadurch gekennzeichnet, daß** der Aufnahmebehälter (2) im Bereich des Teilbehälters (6) und/oder des weiteren Aufnahmefaches (18) Haltemittel für mindestens ein Fahrrad oder dergleichen aufweist.

12. Einrichtung nach einem der Ansprüche 1 bis 11,
**dadurch gekennzeichnet, daß** der Aufnahmebehälter (2) bezüglich der Form und Größe des Innenraumes des Teilbehälters (6) und/oder des Aufnachmefaches (18) derart ausgelegt ist, daß eine bestimmte Anzahl von gleichartigen Einsätzen fixiert unterbringbar ist.

## Claims

1. Device for transporting objects in a vehicle, comprising an essentially trough-shaped holding container (2), the holding container (2) comprising a frame-like retaining part (4) which can be fastened in the vehicle, and at least one subcontainer (6) which can be removed from the retaining part (4) in order to form an access opening (8) in the region of a spare-wheel holder (10) on the vehicle, **characterized in that** the access opening (8) is dimensioned in such a manner and, in the fitted state, is arranged relative to the spare-wheel holder (10) on the vehicle in such a manner that a spare wheel (12) can be guided through the access opening (8).

2. Device according to Claim 1, **characterized in that** the retaining part (4) can be fastened to securing means (14) on the vehicle, these securing means (14) preferably also being suitable for the fastening of a seat construction.

3. Device according to Claim 2, **characterized in that** the securing means (14) are formed by screw points to which the retaining part (4) can be fastened by screwing.

4. Device according to one of Claims 1 to 3, **characterized in that** the subcontainer (6) is to be arranged in a region of the vehicle which is at the rear, as seen in the direction of travel, and faces a rear door (16).

5. Device according to one of Claims 1 to 4, **characterized in that** the holding container (2) has at least one further holding compartment (18) in a front region, as seen in the direction of travel.

6. Device according to one of Claims 1 to 5, **characterized in that** the subcontainer (6) and/or the or each further holding compartment (18) can be closed by at least one cover element (20, 22) in each case.

7. Device according to one of Claims 1 to 6, **characterized in that** the subcontainer (6) and/or the or each further holding compartment (18) has at least one partition element (24) which can be used, in particular, releasably and selectively at various points.

8. Device according to Claim 6 or 7, **characterized in that** at least one of the cover elements (22) can be fixed from its cover position in an arrangement which is essentially perpendicular with respect to the plane of the container.

9. Device according to Claim 8, **characterized in that** the cover element (22) can be released from the holding container (2) and, in the vertical arrangement, can be pushed with its side edges into lateral guides in particular of the additional holding compartment (18).

10. Device according to one of Claims 1 to 9, **characterized in that** the holding container (2)- has retaining means for a, for example, net-like luggage-compartment partitioning means.

11. Device according to one of Claims 1 to 10, **characterized in that** the holding container (2) has, in the region of the subcontainer (6) and/or of the further holding compartment (18), retaining means for at least one bicycle or the like.

12. Device according to one of Claims 1 to 11, **characterized in that** the holding container (2) is configured with regard to shape and size of the interior of the subcontainer (6) and/or of the holding compartment (18) in such a manner that a certain number of identical inserts can be accommodated in a fixed manner.

## Revendications

1. Dispositif pour le transport d'objets dans un véhicule, composé d'un récipient de logement (2) composé d'une partie de support (4) en forme de cadre qui peut être fixée dans le véhicule, et d'au moins un récipient partiel (6) qui peut être éloigné de la partie de support (4) pour former une ouverture d'accès (8) dans la région d'un logement de roue de secours (10) solidaire du véhicule,
**caractérisé en ce que** l'ouverture d'accès (8) est dimensionnée et disposée par rapport au logement de roue de secours (10) solidaire du véhicule dans l'état monté, de telle manière qu'une roue de secours (12) puisse être enfilée à travers l'ouverture d'accès (8).

2. Dispositif selon la revendication 1,
**caractérisé en ce que** la partie de support (4) peut être fixée à des montures (14) solidaires du véhicule, ces fixations (14) étant de préférence également appropriées pour fixer une construction de siège.

3. Dispositif selon la revendication 2,
**caractérisé en ce que** les fixations (14) sont formées par des points de vissage auxquels la partie de support(4) peut être fixée par vissage.

4. Dispositif selon une des revendications 1 à 3,
**caractérisé en ce que** le récipient partiel (6) doit être disposé dans une région du véhicule, arrière vu dans le sens de la marche, dirigée vers la porte arrière (16).

5. Dispositif selon une des revendications 1 à 4,
**caractérisé en ce que**, dans la région avant, vu dans le sens de la marche. le récipient de logement (2) présente au moins une case de logement additionnelle (18)

6. Dispositif selon une des revendications 1 à 5,
**caractérisé en ce que** le récipient partiel (6) et/ou la ou chaque case de logement additionnelle (18) peut/peuvent être fermé(s) chacun par au moins un élément formant couvercle (20, 22).

7. Dispositif selon une des revendications 1 à 6,
**caractérisé en ce que** le récipient partiel (6) et/ou la ou chaque case de logement additionnelle (18) présente(nt) au moins un élément formant cloison (24), en particulier amovible et qui peut être placé en différents endroits.

8. Dispositif selon une des revendications 6 ou 7,
**caractérisé en ce qu'**au moins un des éléments formant couvercle (22), étant écarté de sa position de couvercle, peut être immobilisé dans une disposition sensiblement perpendiculaire au plan du récipient.

9. Dispositif selon la revendication 8,
**caractérisé en ce que** l'élément formant couvercle (22) peut être détaché du récipient de logement (2) et, étant placé dans la disposition verticale, peut être emmanché par ses bords latéraux dans des guides latéraux, qui appartiennent en particulier à la case de logement additionnelle (18).

10. Dispositif selon une des revendications 1 à 9,
**caractérisé en ce que** le récipient de logement (2) présente des moyens de support pour une séparation du compartiment à bagages, par exemple en forme de filet.

11. Dispositif selon une des revendications 1 à 10,
**caractérisé en ce que** le récipient de logement (2) présente, dans la région du récipient partiel (6) et/ou de la case de logement additionnelle (18), des moyens de support pour au moins une bicyclette ou analogue.

12. Dispositif selon une des revendications 1 à 11,
**caractérisé en ce que** le récipient de logement (2) est conçu, en ce qui concerne la forme et la dimension de l'espace intérieur du récipient partiel (6) et/ou de la case de logement (18), de telle manière qu'un certain nombre d'éléments rapportés de même genre puissent y être placés et immobilisés.
